# EUROPÄISCHE PATENTSCHRIFT

(11) **EP 1 780 061 B1**
(45) Veröffentlichungstag und Bekanntmachung des Hinweises auf die Patenterteilung: **10.09.2008**
(21) Anmeldenummer: 05292275.4
(22) Anmeldetag: 26.10.2005
(51) Int. Cl.: B60H 1/22, F24H 9/18

(54) **Heizungsanordnung mit elektrischen Heizelementen für ein Kraftfahrzeug**
Heater for a vehicle with electrical heating elements
Dispositif de chauffage électrique pour un véhicule automobile

(43) Veröffentlichungstag der Anmeldung: 02.05.2007
(73) Patentinhaber: Behr France Rouffach SAS, 68250 Rouffach (FR)
(72) Erfinder: Brun, Michel, 68740 Rustenhart (FR); Denny, Geoffrey, 68100 Mulhouse (FR); Eckerlen, Gérard, 68250 Rouffach (FR); Miss, Pascal, 67600 Sélestat (FR); Mougey, Mathieu, 68190 Ensisheim (FR); Schmittheisler, Christophe, 67680 Epfig (FR); Gogmos, Erwan, 68000 Colmar (FR)
(74) Vertreter: Nestler, Jan Hendrik

(56) Entgegenhaltungen:
- EP-A- 0 538 131
- DE-A1- 19 804 812
- FR-A- 2 855 933

## Beschreibung

Die Erfindung betrifft eine Heizungsanordnung mit elektrischen Heizelementen, insbesondere für ein Kraftfahrzeug, gemäß dem Oberbegriff des Anspruchs 1. Eine solche Heizungsanordnung ist aus EP 0 538 131 bekannt.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Gemäß einem offenbarten Ausführungsbeispiel ist ein PTC-Element in Gestalt mehrerer Heizwaben in einem nicht näher beschriebenen Kunststoff-Rahmen angeordnet, der die Luftaustrittsöffnung einfasst.

Die elektrischen Zuheizer werden insbesondere auch für eine Kompensation der mangelnden Heizleistung resultierend aus der niedrigen Abwärme moderner Fahrzeugmotoren oder zur Komfortsteigerung für eine schnelle Innenraumaufheizung eingesetzt. Diese elektrischen Zuheizer, beispielsweise PTC-Zuheizer, werden bei laufendem Motor durch das Bordnetz versorgt. Für einen motorunabhängigen Betrieb werden diese PTC-Zuheizer aufgrund der hohen Leistungsaufnahme nicht eingesetzt. Zudem sind die herkömmlichen PTC-Zuheizer nur für den Betrieb mit einem Spannungspotential ausgelegt.

Für die Fahrzeugvorwärmung sind zusätzliche Geräte erhältlich, die nachträglich im Fahrzeuginnenraum angebracht werden und über eine Spannung aus dem öffentlichen Energieversorgungsnetz betrieben werden. Bei diesen nachträglich eingebauten Zusatzgeräten werden vorhandene Komponenten der Fahrzeugklimaanlage nicht genutzt.

In der deutschen Patentanmeldung DE 103 55 396 A1 ist eine Kraftfahrzeug-Klimaanlage mit Standheizung beschrieben, die im Falle eines Kraftfahrzeug-Motor-Stillstands durch eine externe zweite Energieversorgung, insbesondere zur Energieversorgung von PTC-Heizelementen, mit Energie versorgt wird, wobei eine Vorrichtung zum Umschalten zwischen einer ersten Energieversorgung, die beispielsweise von einem Kraftfahrzeugmotor erzeugte Energie über ein Bordnetz zur Verfügung stellt, oder der externen zweiten Energieversorgung vorgesehen ist.

In der DE 100 25 713 A1 ist ein Heizsystem, insbesondere für Kraftfahrzeuge beschrieben, mit mindestens einem mittels einer ersten Energiequelle betriebenen ersten Heizgerät und mindestens einem mittels einer zweiten Energiequelle betriebenen zweiten Heizgeräts. Als Heizgeräte sind unter anderem PTC-Elemente aufgeführt die beispielsweise über eine Batterie oder einen Netzanschluss betrieben werden.

Es ist Aufgabe der Erfindung, eine verbesserte Heizungsanordnung mit elektrischen Heizelementen, insbesondere PTC-Elementen, zur Verfügung zu stellen.

Diese Aufgabe wird gelöst durch eine Heizungsanordnung mit elektrischen Heizelementen, insbesondere PTC-Elementen, mit den Merkmalen des Anspruchs 1. Vorteilhafte Ausgestaltungen sind Gegenstand der Unteransprüche.

Erfindungsgemäß ist eine Heizungsanordnung, insbesondere für ein Kraftfahrzeug, mit zumindest zwei Baugruppen ausgebildet, wobei die Baugruppen zumindest einen Heizstrang umfassen, mit zumindest jeweils einem elektrischen Heizelement, Kontaktelementen und zumindest jeweils einem Element zur Wärmeübertragung, wobei mindestens zwei Baugruppen in Luftströmungsrichtung hintereinander in verschiedenen Ebenen, die vorzugsweise senkrecht zur Luftströmungsrichtung angeordnet sind, angeordnet sind. Hierbei wird in einer ersten Ebene ein erster Teilluftstrom an dem oder den Heizelementen mindestens einer der Baugruppen vorbeigeführt und zweiter Teilluftstrom durch die Baugruppen geführt und an dem oder den Heizelementen entlanggeführt, und zumindest ein Teil des ersten Teilluftstroms und/oder zumindest ein Teil des zweiten Teilluftstroms zuvor und/oder danach in einer zweiten Ebene durch mindestens eine weitere Baugruppe geführt und an dem oder den Heizelementen entlanggeführt.

Vorteilhafterweise weist ein Heizstrang hierbei eine Mehrzahl von Heizelementen auf, wobei ein Heizelement zwischen zwei Kontaktelementen angeordnet ist. Die Heizelemente werden bevorzugt durch PTC-Elemente gebildet.

Bevorzugt sind die Kontaktelemente in Form von Kontaktblechen und die Elemente zur Wärmeübertragung als Wellrippen oder als Bleche, die im Wesentlichen senkrecht zur Längsrichtung der Heizelemente angeordnet sind, ausgebildet.

Die Heizungsanordnung erstreckt sich vorzugsweise in mindestens einer der Ebenen nur über eine Teilfläche des gesamten Luftkanalquerschnitts und in der anderen Ebene über zumindest teilweise eine andere Teilfläche des gesamten Luftkanalquerschnitts, vorzugsweise jedoch über die gesamte Fläche desselben. Durch eine Heizungsanordnung mit unterschiedlich langen Luftströmungswegen entlang den Heizelementen lässt sich eine unterschiedliche Erwärmung einzelner Teilbereiche des Luftstroms, d.h. einzelner Teilluftströme, erreichen.

Die Baugruppe(n), die vom ersten Teilluftstrom durchströmt werden und an denen der zweite Teilluftstrom vorbeiströmt, nehmen vorzugsweise 50% +/-25%, insbesondere 50% +/- 15%, insbesondere bevorzugt 50% +/- 5% der Gesamtfläche senkrecht zur Luftströmungsrichtung ein. Ist die entsprechende Baugruppe schräg zur Luftströmungsrichtung angeordnet, so gelten die genannten Bereiche für eine Projektion auf eine Ebene, die senkrecht zur Luftströmungsrichtung angeordnet ist.

Die vom ersten Teilluftstrom durchströmte Baugruppe ist vorzugsweise versetzt zu mindestens einer anderen Baugruppe angeordnet. Besonders bevorzugt ist eine mittige oder seitliche Anordnung. Die Anordnung kann sowohl symmetrisch als auch asymmetrisch sein. Insbesondere in Hinblick auf eine zwei- oder vierzonige Klimaanlage ist eine symmetrische Anordnung sinnvoll. Eine symmetrische Ausgestaltung ist insbesondere auch in Hinblick auf eine Luftverteilung beispielsweise auf einen linken und rechten Ausströmer sinnvoll. Soll eine Temperaturschichtung, insbesondere oben kälter als unten, erfolgen, ist eine asymmetrische Anordnung hilfreich. In diesem Zusammenhang ist es denkbar, dass die Baugruppe(n), an denen der zweite Teilluftstrom vorbeiströmt, in Bereichen, die benachbart zu den Baugruppen, durch die der erste Teilluftstrom strömt, liegen, zumindest bereichsweise eine Aussparung aufweisen. Üblicherweise ist die Heizungsanordnung jedoch derart ausgebildet, dass die Baugruppe(n), an denen der zweite Teilluftstrom vorbeiströmt, auch in solchen Bereichen im Wesentlichen durchgängig ausgebildet sind, die benachbart zu den Baugruppen, durch die der erste Teilluftstrom strömt, liegen.

Bevorzugt ist mindestens eines der elektrischen Heizelemente, welches bevorzugt durch ein PTC-Element gebildet ist, der vom ersten Teilluftstrom durchströmte Baugruppe versetzt zu mindestens einem in Luftströmungsrichtung dahinter oder davor angeordneten elektrischen Heizelement, das bevorzugt ebenfalls durch ein PTC-Element gebildet ist, der benachbarten Baugruppe angeordnet. Insbesondere bevorzugt sind sämtliche Heizelemente versetzt zu den in einer anderen Ebene angeordneten Heizelementen angeordnet. Dies ermöglicht, dass der beide Baugruppen durchströmende Teilluftstrom gleichmäßiger erwärmt wird. Bevorzugt sind die PTC-Elemente hierbei auf Lücke angeordnet, wobei die versetzten Heizelemente jeweils etwa mittig zwischen den Heizelementen der anderen Ebene angeordnet sind.

Die Leistung der vom ersten Teilluftstrom durchströmten Baugruppe in der ersten Ebene ist vorzugsweise kleiner ist als die Gesamtleistung der in der Ebene senkrecht zur Luftströmungsrichtung angeordneten Baugruppe(n),
wobei der Gesamtluftstrom diese Baugruppe(n) durchströmt. Hierbei muss in Luftströmungsrichtung gesehen die erste Ebene nicht notwendigerweise vor der zweiten Ebene angeordnet sein. Es kann aus strömungstechnischen Gründen durchaus vorteilhaft sein, wenn die erste Ebene, in welcher nicht die gesamte Strömungsfläche des Luftkanals von Baugruppen eingenommen wird, in Luftströmungsrichtung hinter der Ebene liegt, in welcher die gesamte freie Strömungsfläche des Luftkanals mit einer oder mehreren Baugruppen versehen ist.

Die Leistung der vom ersten Teilluftstrom durchströmten Baugruppe beträgt vorzugsweise 400 bis 1000 W, insbesondere 500 bis 800 W, insbesondere bevorzugt 600 +/- 50W. Die angegebenen Bereiche, insbesondere der Bereich von 600 +/- 50W ermöglichen eine optimale Erwärmung.

Die Leistung der vom gesamten Luftstrom durchströmten Baugruppen, die in der zweiten Ebene senkrecht zur Luftströmungsrichtung angeordnet sind, beträgt vorzugsweise 500 bis 2000 W, insbesondere 800 bis 1500 W, insbesondere bevorzugt 1000 +/- 100W.

Insbesondere eine Kombination der zuvor genannten Leistungsbereiche, insbesondere 500 bis 800 W und 800 bis 1500 W, führt zu einer optimalen Erwärmung des dem Fahrzeuginnenraum zuzuführenden Luftstroms.

Vorzugsweise ist zumindest eine der Baugruppen von einer Niederspannungsquelle versorgt. Bevorzugt sind sämtliche Baugruppen der Heizungsanordnung von einer Niederspannungsquelle versorgt.

Soll die Heizungsanordnung für einen Standbetrieb mit externer Energieversorgung verwendet werden, so können neben den Niederspannungsbaugruppen auch Baugruppen vorgesehen sein, die von einer Hochspannungsquelle versorgt werden. Auch diese können entsprechend der Erfindung angeordnet sein, d.h. in zwei Ebenen, wobei die Baugruppe(n) einer Ebene nur eine Teilfläche des gesamten Strömungsquerschnitts einnehmen, und vorzugsweise die Baugruppe(n) der anderen Ebene eine andere Teilfläche, vorzugsweise aber die gesamte Fläche des Strömungsquerschnitts einnehmen.

Vorteilhafterweise wird als Niederspannungsquelle für die Niederspannungsbaugruppen die Kraftfahrzeugbordnetzspannung eingesetzt und für die Versorgung der Hochspannungsbaugruppen die Netzspannung, beispielsweise eines öffentlichen Versorgungsnetzes. Die Bordnetzspannung liegt üblicherweise bei Werten zwischen 12 ± 2 V und 14 ± 2V. Sie kann aber auch bei höheren Spannungen wie beispielsweise 24 t 2 V, 42 ± 2 V oder 48 ± 2V liegen. Die Netzspannung, die zur Versorgung der Hochspannungsbaugruppen dient ist abhängig vom Betreiberland und beträgt beispielsweise 110 ± 10 V oder 230 ± 20 V. Denkbar ist es aber auch, dass als Hochspannung keine Netzspannung eines öffentlichen Versorgungsnetzes, sondern eine erhöhte Bordnetzspannung verwendet wird, wie beispielsweise 24 t 2 V, 42 ± 2 V oder 48 ± 2V. Eine Umschaltung zwischen unterschiedlichen Netzspannungen verschiedener Länder und/oder erhöhten Bordnetzspannungen kann beispielsweise mittels einer Umschaltvorrichtung am Fahrzeug oder mittels entsprechender Adapter vorgenommen werden. Im normalen Fahrbetrieb wird die Heizanordnung üblicherweise über das Bordnetz versorgt. Für den Fall des Fahrzeugsstillstands wird die Heizungsanordnung durch Anschluss an eine Steckdose, beispielsweise an Rastplätzen, mit Strom versorgt. Vorteilhafterweise wird mittels der Netzspannung auch ein Gebläse zur Förderung der Luft angetrieben. Insbesondere bei tiefen Temperaturen, kann das Fahrzeug vor Inbetriebnahme durch Anschließen an eine Steckdose vorgeheizt werden.

Besonders bevorzugt sind zumindest zwei Baugruppen zu einer Baueinheit zusammengefasst oder miteinander verbunden und/oder von einem Halteelement oder Rahmen gehalten beziehungsweise mittels eines solchen fixiert. Insbesondere werden Niederspannungs- und Hochspannungsbaugruppen von voneinander getrennten Halteelementen oder Rahmen gehalten und/oder sind in diese eingelegt. Vorzugsweise sind Halteelemente oder Rahmen, beispielsweise über ein Verbindungselement miteinander verbunden. Als Verbindungselement ist insbesondere ein Zwischenrahmen vorteilhaft einsetzbar. Die Niederspannungsbaugruppen und Hochspannungsbaugruppen sind durch die Fixierung mittels der Halteelemente oder Rahmen und/oder des Verbindungselements oder des Zwischenrahmens elektrisch voneinander isoliert ausgebildet. Eine entsprechende Ausgestaltung ist auch zwischen einzelnen in Luftströmungsrichtung hintereinander angeordneten Niederspannungsbaugruppen oder Hochspannungsbaugruppen vorgesehen.

Halteelemente oder Rahmen und/oder das Verbindungselement oder der Zwischenrahmen bestehen vorzugsweise aus Kunststoff, wobei sie insbesondere bevorzugt als spritzgegossene Kunststoff-Teile ausgeführt sind. Die einzelnen Elemente können auch mehrteilig hergestellt und anschließend miteinander verbunden werden, vorzugsweise mittels Steck- oder ClipsVerbindungen oder Klebens.

In einer weiteren vorteilhaften erfindungsgemäßen Ausgestaltung der Heizungsanordnung sind zumindest zwei Niederspannungsbaugruppen und/oder zumindest zwei Hochspannungsbaugruppen spiegelbildlich angeordnet und/oder im Wesentlichen gleich aufgebaut.

Da sowohl Niederspannungs- als auch Hochspannungsbaugruppen, die für verschiedene Heizungsanordnungen bevorzugt identisch oder zumindest mit gleichen Unterbaugruppen ausgebildet sind, in einer großen Stückzahl hergestellt werden können, können die Herstellungskosten gesenkt und die Logistik vereinfacht werden. Da eine Vielzahl gleicher Teile verwendet wird, die gegebenenfalls unterschiedlich zusammengesetzt werden, lassen sich zudem Varianten optimieren, d.h. die Position der PTC-Elemente kann an die Erfordernisse, d.h. an den Verlauf der Luftströmung, optimal angepasst werden.

Der Rahmen zur Aufnahme der Baugruppen weist vorzugsweise eine als Trennwand dienende Querstrebe auf, welche zwei benachbarte Baugruppen voneinander räumlich und/oder thermisch und/oder elektrisch trennt. Die Querstrebe ist bevorzugt in einer Symmetrieebene des Rahmens angeordnet. Insbesondere im Falle einer mehrzonigen Klimaanlage ist zur Trennung der Luftströme bevorzugt senkrecht zu einer ersten, parallel zu den Baugruppen verlaufenden Querstrebe eine zweite Querstrebe vorgesehen. Entsprechend weist auch insbesondere der Zwischenrahmen eine als Trennung dienende Querstrebe auf, welche im Wesentlichen fluchtend zu einer Querstrebe eines Rahmens angeordnet ist. Die Verbindung der Rahmen kann jedoch auch auf andere Weise erfolgen, bspw. mittels Schrauben oder Kleben.

Der Rahmen zur Aufnahme der Baugruppen ist bevorzugt aus mindestens zwei Rahmenelementen ausgebildet. Dabei sind die einzelnen Rahmenelemente bevorzugt mittels Clipsverbindungen miteinander verbunden, wodurch eine sehr einfache und schnelle Montage ohne Werkzeug möglich ist.

Jede Baugruppe weist vorzugsweise mindestens zwei Kontaktbleche auf, an welchen seitlich ein Element zur elektrischen Kontaktierung angebracht ist Dabei sind die Kontaktbleche, die mit den Elementen zur Kontaktierung verbunden sind, gleich ausgebildet wie die anderen Kontaktbleche der Baugruppe. An den Elementen zur Kontaktierung sind bevorzugt Federzungen zur Verbesserung der elektrischen Kontaktierung vorgesehen. Diese können für Nieder- und Hochspannungsbaugruppen, angepasst an die unterschiedlichen Ströme verschieden ausgebildet sein.

Die Baugruppe weist vorzugsweise mindestens zwei Wellrippen auf, welche auf der Außenseite zweier Kontaktbleche zwischen denen ein PTC-Element vorgesehen ist, angeordnet sind. Die Baugruppe kann um eine, zwei oder gegebenenfalls mehr Wellrippen erweitert werden, wobei bevorzugt zwischen zwei Wellrippen ein Kontaktblech vorgesehen ist. Dies ermöglicht bei identischem Aufbau des Kernbereichs eine relativ variable Gestaltung der Breite der Baugruppe. Die Heizungsanordnung kann sowohl gemeinsam geregelte als auch, insbesondere im Falle von mehrzonigen Klimaanlagen, unabhängig voneinander geregelte Heizstränge oder Baugruppen umfassen.

Die elektrische Kontaktierung der Kontaktelemente erfolgt bevorzugt mit Hilfe einer seitlich am Rahmen vorgesehenen Abdeckung, welche einen Teil des Rahmens bildet. Diese ist vorzugsweise auch mittels Clipsverbindungen befestigt. Auf der Außenseite der Abdeckung sind vorzugsweise Stecker vorgesehen.

Die elektrische Ansteuerung der Nieder- und/oder Hochspannungsbaugruppen beziehungsweise der Heizstränge kann über einen elektronischen Regler, der integriert an der Heizungsanordnung, insbesondere innerhalb einer Abdeckung angeordnet ist, erfolgen. Möglich ist es auch, dass zumindest eine der Baugruppen auch von außen beispielsweise über eine Relaisschaltung angesteuert wird.

Möglich ist es, dass bei der vorgeschlagenen Heizungsanordnung zumindest eine als Hochspannungsbaugruppe ausgebildete Baugruppe und zumindest eine als Niederspannungsbaugruppe ausgebildete Baugruppe in einer Ebene angeordnet sind. Durch eine derartige Ausbildung kann insbesondere Bauraum in der Tiefe eingespart werden. Auch können bei einer derartigen Ausbildung beispielsweise beim Betrieb der Hochspannungsbaugruppe(n) die Wellrippen der Niederspannungsbaugruppe(n) mit zur Wärmeübertragung an die hindurchstreichende Luft verwendet werden, so dass eine besonders gute Wärmeübertragungsleistung und/oder ein besonders geringes Bauraumerfordernis der gesamten Heizungsanordnung realisiert werden kann.

Weiterhin ist es möglich, dass zumindest eine als Niederspannungsbaugruppe ausgebildete Baugruppe und/oder zumindest eine als Hochspannungsbaugruppe ausgebildete Baugruppe jeweils genau eine Lage und/oder genau zwei Lagen von Heizelementen aufweist. Als "Lage" ist dabei insbesondere eine jeweils zwischen einem Paar von Kontaktelementen nebeneinander angeordnete Mehrzahl von Heizelementen, wie insbesondere so genannten PTC-Steinen zu verstehen. Durch einen derartigen Aufbau ist eine besonders effektive Ansteuerung und Wärmeübertragungsleistung der Gesamtanordnung erzielbar.

Es kann vorgesehen werden, dass zumindest eine als Niederspannungsbaugruppe ausgebildete Baugruppe und/oder zumindest eine als Hochspannungsbaugruppe ausgebildete Baugruppe jeweils genau ein stromzuführendes Kontaktelement aufweist. Dieses Kontaktelement kann insbesondere zwei Lagen von Heizelementen mit elektrischem Strom versorgen. Dazu kann das Kontaktelement mit einer Hochspannungsquelle und/oder eine Niederspannungsquelle verbunden sein.

Weiterhin ist es denkbar, dass zumindest zwei Baugruppen, insbesondere zumindest eine als Niederspannungsbaugruppe ausgebildete Baugruppe und zumindest eine als Hochspannungsbaugruppe ausgebildete Baugruppe zumindest ein gemeinsames stromableitendes Kontaktelement aufweisen. Eine derartige beispielsweise gemeinsame Masseleitung kann einen besonders einfachen Aufbau der Heizungsanordnung fördern, da beispielsweise an sich überflüssige Isolationsmaßnahmen vermieden werden können.

Ein besonders zu bevorzugender Aufbau ergibt sich, wenn zumindest in Teilbereichen der Heizungsanordnung als Niederspannungsbaugruppen ausgebildete Baugruppen und als Hochspannungsbaugruppen ausgebildete Baugruppen jeweils aufeinander abfolgen. Dadurch kann ein besonders effektiver Aufbau zur Verfügung gestellt werden.

Weiterhin ist es auch möglich, dass zumindest eine als Niederspannungsbaugruppe ausgebildete Baugruppe und/oder zumindest eine als Hochspannungsbaugruppe ausgebildete Baugruppe in unterschiedlichen Ebenen angeordnet sind. Die durch die Gesamtanordnung hindurchgehende Luft streicht also in aller Regel nacheinander durch die entsprechenden Baugruppen hindurch. Ein derartiger Aufbau kann insbesondere die erforderliche Stirnfläche der Heizungsanordnung vermindern helfen.

Im Folgenden wird die Erfindung anhand von mehreren Ausführungsbeispielen, teilweise unter Bezugnahme auf die Zeichnung, im Einzelnen erläutert. In der Zeichnung zeigen:
- Fig. 1: eine schematische, perspektivische Darstellung einer erfindungsgemäßen Heizungsanordnung,
- Fig. 2: eine schematische, perspektivische Darstellung der beiden im zusammengebauten Zustand in normaler Luftströmungsrichtung hintereinander angeordneten Baugruppen,
- Fig. 3: eine Fig. 1 entsprechende Darstellung der Heizungsanordnung mit Regler,
- Fig. 4: eine schematische Draufsicht auf die Heizungsanordnung von Fig. 1,
- Fig. 5: eine schematische Schnittdarstellung der Heizungsanordnung von Fig. 1,
- Fig. 6: eine perspektivische Ansicht zweier Niederspannungsbaugruppen eines ersten Teils einer Heizungsanordnung,
- Fig. 7: eine perspektivische Ansicht der Niederspannungsbaugruppen in einem teilmontierten Zustand in einem Rahmen,
- Fig. 8: eine perspektivische Ansicht zweier Hochspannungsbaugruppen eines zweiten Teils einer Heizungsanordnung,
- Fig. 9: eine perspektivische Ansicht der Hochspannungsbaugruppen in einem teilmontierten Zustand in einem Rahmen,
- Fig. 10: eine perspektivische, explosionsartige Ansicht einer Heizanordnung mit Nieder- und Hochspannungsbaugruppen und einem Zwischenrahmen, wobei eine Niederspannungsbaugruppe nur schematisch dargestellt ist,
- Fig. 11: eine perspektivische Ansicht der Anordnung nach Fig. 10 im zusammengebauten Zustand, wobei eine Niederspannungsbaugruppe in der Darstellung fehlt, und
- Fig. 12: eine perspektivische Ansicht der Heizungsanordnung gemäß Fig. 11 mit elektronischer Regel- und Steuereinheit, wobei eine Niederspannungsbaugruppe in der Darstellung fehlt.

Eine Heizungsanordnung 1 gemäß dem ersten Ausführungsbeispiel dient als Zuheizer in einer zweizonigen Kraftfahrzeug-Klimaanlage, wobei sie in Luftströmungsrichtung gesehen nach einem herkömmlichen Heizer angeordnet ist. Die Heizungsanordnung 1 besteht aus einer ersten Baugruppe 11 und einer zweiten Baugruppe 12, wobei die erste Baugruppe 11 in Luftströmungsrichtung gesehen hinter der zweiten Baugruppe 12 angeordnet ist.

Hierbei ist jedoch die erste Baugruppe 11 schmaler ausgebildet als die zweite Baugruppe 12.

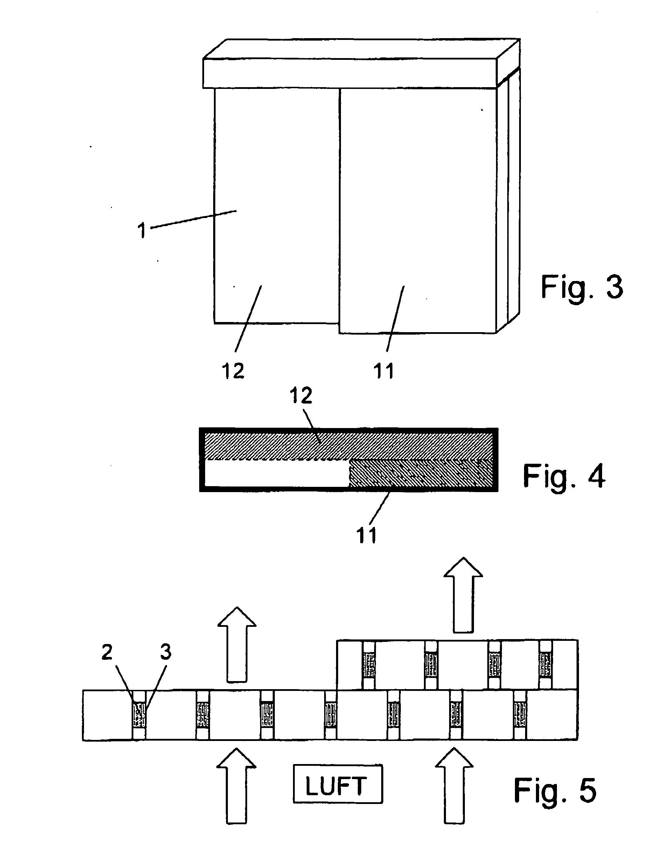

Jede der Baugruppen 11 und 12 weist eine Mehrzahl von PTC-Elementen 2 und dieselben elektrisch kontaktierende Kontaktbleche 3 auf. Mehrere PTC-Elemente 2 samt entsprechender Kontaktbleche 3 und zwischen denselben angeordnete Wellrippen (nicht näher dargestellt) bilden einen Heizstrang, wobei gemäß dem ersten Ausführungsbeispiel die erste Baugruppe 11 aus einem einzigen Heizstrang besteht, der in einem Rahmen (nicht näher dargestellt) angeordnet ist, und die zweite Baugruppe 12 aus einem anderen Heizungsstrang besteht, der deutlich breiter ausgebildet ist und ebenfalls in einem anderen, entsprechend breiter ausgebildeten Rahmen (nicht näher dargestellt) angeordnet ist. Beide Baugruppen 11 und 12 werden mit der Bordnetzspannung versorgt. Zur vorliegend gemeinsamen Regelung ist, wie in Fig. 3 angedeutet, oben ein Regler zur gemeinsamen Regelung der Stromversorgung beider Heizungsstränge vorgesehen. Hierbei dient der Regler zur gegenseitigen Positionierung und Fixierung der beiden Rahmen, wobei weitere Maßnahmen zur Fixierung vorgesehen sein können. Vorliegend beträgt die maximale Leistung des Heizungsstrangs der ersten Baugruppe 11 600 W, die des Heizungsstrangs der größeren Baugruppe 12 1000 W.

Wie aus Fig. 5 ersichtlich, sind die PTC-Elemente 2 der beiden Baugruppen 11 und 12 versetzt "auf Lücke" angeordnet, so dass, wenn beide Baugruppen 11 und 12 von einem Teil der Luft durchströmt werden, eine sehr gleichmäßige Erwärmung erfolgt.

In Folge der unterschiedlichen Dicke der Heizungsanordnung 1, d.h. eine unterschiedliche Länge des Luftströmungsweges durch die erste Baugruppe 11 bedingt, mit anderen Worten dadurch, dass die erste Baugruppe 11 nur über einen Teil des gesamten Luftkanals angeordnet ist, kann eine ungleichmäßige Erwärmung der Luft erreicht werden, so dass eine Temperaturschichtung erreicht wird. Im vorliegenden Ausführungsbeispiel wird durch die unterschiedliche Erwärmung der Luft die dem Fahrzeuginnenraum oben zugeführte Luft weniger erwärmt als die dem Fußraum zugeführte Luft (Temperaturschichtung), was von den Insassen, insbesondere dem Fahrer, als angenehmer empfunden wird.

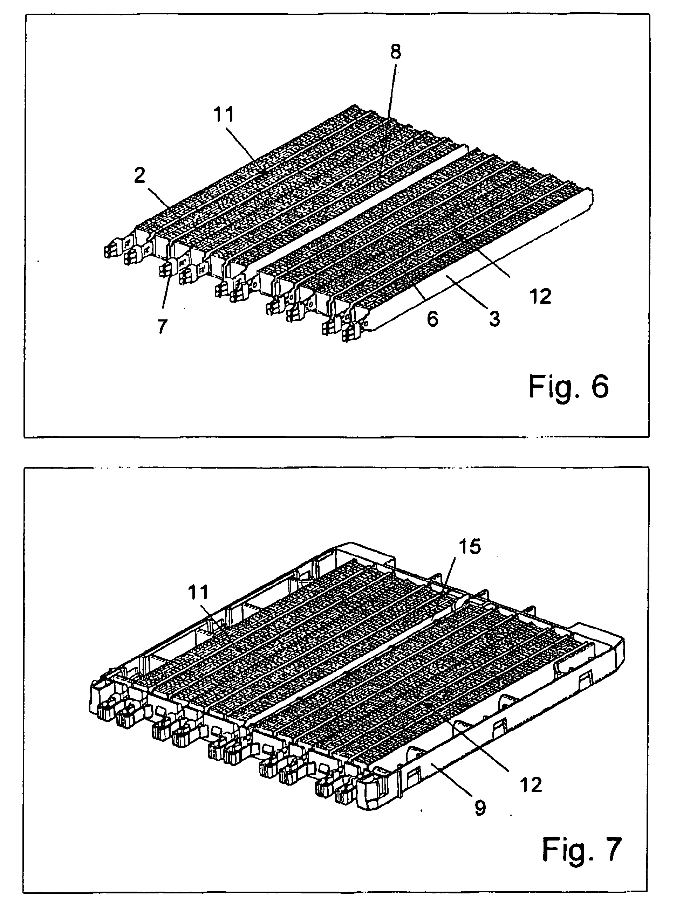

Im Folgenden wird unter Bezugnahme auf die Figuren 6 bis 12 ein weiteres Ausführungsbeispiel näher erläutert, gemäß dem eine Heizungsanordnung 1 mit Niederspannungsbaugruppen (Baugruppen 11 und 12 und eine weitere, entsprechend der Baugruppe 11 ausgebildete, zentral in Luftströmungsrichtung hinter den beiden Baugruppen 11 und 12 angeordnete Baugruppe 11', die jedoch nicht explizit sondern nur teilweise angedeutet in der Zeichnung dargestellt ist) und Hochspannungsbaugruppen (Baugruppen 13 und 14) vorgesehen ist. Dabei strömt ein Teil des Luftstroms auf zwei Seiten an der Baugruppe 11' vorbei, d.h. nur der mittlere Teil des Luftstroms durchströmt die Baugruppe 11' (und die Baugruppen 11 oder 12 und 13 oder 14).

Eine PTC-Heizungsanordnung 1, die als Zuheizer in einer zweizonigen Kraftfahrzeug-Klimaanlage in Luftströmungsrichtung gesehen nach einem herkömmlichen Heizer angeordnet ist, ist in einem Ausführungsbeispiel der Erfindung durch drei Baugruppen 11, 11' und 12 die mit einer Bordnetzspannung versorgt werden und zwei Baugruppen 13 und 14, die mit einer Netzspannung versorgt werden, gebildet.

Die in Fig. 6 dargestellten Baugruppen 11 und 12, wie auch die nicht näher dargestellte Baugruppe 11', bestehen aus einer Mehrzahl von Keramik-PTC-Elementen 2, Kontaktblechen 3 und Wellrippen 6. Ein Keramik-PTC-Element 2 ist zwischen zwei parallel zueinander angeordneten Kontaktblechen 3 eingeklebt, vorliegend mittels eines elektrisch leitenden Klebstoffes (nicht dargestellt). Ebenso kann beispielsweise auch eine Lot-Verbindung vorgesehen sein. Auf den jeweils dem PTC-Element 2 gegenüberliegenden Seiten der Kontaktbleche 3 sind mittels einer entsprechenden Klebe-Verbindung Wellrippen 6 angebracht, die wiederum auf der dem PTC-Element 2 abgewandten Seite mit einem weiteren Kontaktblech 3 entsprechend verbunden sind. Die dargestellten Baugruppen 11 und 12 sind im Wesentlichen spiegelbildlich ausgebildet. Die Baugruppe 11' entspricht der Baugruppe 11, ist jedoch versetzt zwischen den Baugruppen 11 und 12 in Luftströmungsrichtung gesehen dahinter angeordnet.

Vorliegend sind, wie in Fig. 6 dargestellt, für jede Baugruppe 11 und 12, vier PTC-Elemente 2 vorgesehen, die jeweils zwischen zwei Kontaktblechen 3 angeordnet sind, welche wiederum von Wellrippen 6 getrennt sind, wobei teilweise auch zwischen zwei Wellrippen 6 nur ein Kontaktblech 3 ohne PTC-Element 2 vorgesehen ist. Verschiedene Kontaktbleche 3 sind auf einer Seite durch Anbringung eines Elements zur Kontaktierung 7 verlängert ausgebildet, so dass sie der elektrischen Kontaktierung dienen. Dabei sind zwischen je zwei verlängert ausgebildeten Kontaktblechen 3 jeweils genau ein PTC-Element 2 vorgesehen. Ferner sind ein oder zwei Wellrippen 6 und ein oder zwei nicht verlängert ausgebildete Kontaktbleche 3 zwischen je zwei verlängert ausgebildeten Kontaktblechen 3 vorgesehen. Zwischen zwei benachbarten, verlängert ausgebildeten Kontaktblechen 3 der Baugruppen 11, 11' und 12 liegt eine Spannung von 13 V an, die Spannung kann jedoch auch größer sein, beispielsweise 24 V, 42 V oder 48 V. Die in Fig. 6 dargestellten Baugruppen bilden - gemeinsam mit der Baugruppe 11' - die Niederspannungsbaugruppen einer der Erfindung folgenden Heizanordnung, die über die Bordnetzspannung versorgt werden.

Jede der Baugruppen 11, 11' und 12 bildet, auf Grund der gemeinsamen elektrischen Kontaktierung der einzelnen PTC-Elemente jeder Baugruppe ein voneinander unabhängig geregeltes Heizteil. Natürlich ist, insbesondere für eine einzonige Klimaanlage, auch eine einfache, gemeinsame Regelung der beiden Baugruppen 11, 11' und 12 möglich.

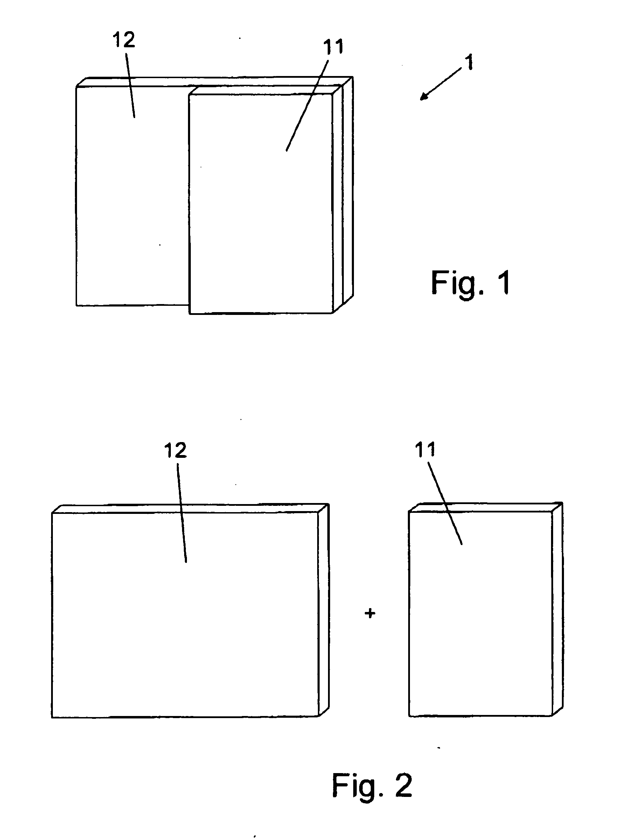

Um die zuvor beschriebene Anordnung der Niederspannungsbaugruppen 11 und 12 ist gemäß Fig. 2 ein zweiteiliger Kunststoff-Rahmen 9, vorliegend aus Polyamid, angeordnet, wobei die beiden Rahmenelemente mittels Clipsverbindungen miteinander verbunden sind. Die Baugruppe 11' ist in einem entsprechenden Rahmen angeordnet, der am Kunststoff-Rahmen 9 angeclipst ist. Für die Montage werden die beiden Baugruppen 11 und 12 bzw. 11' in das entsprechende Rahmenelement eingelegt. Dabei sind die beiden Baugruppen 11 und 12 beabstandet voneinander angeordnet. Der Rahmen 9 weist eine als Trennwand dienende Querstrebe 15 auf, welche die beiden benachbarten Baugruppen räumlich, thermisch und/oder elektrisch voneinander trennt. Die Querstrebe 15 ist bevorzugt in einer Symmetrieebene des Rahmens angeordnet.

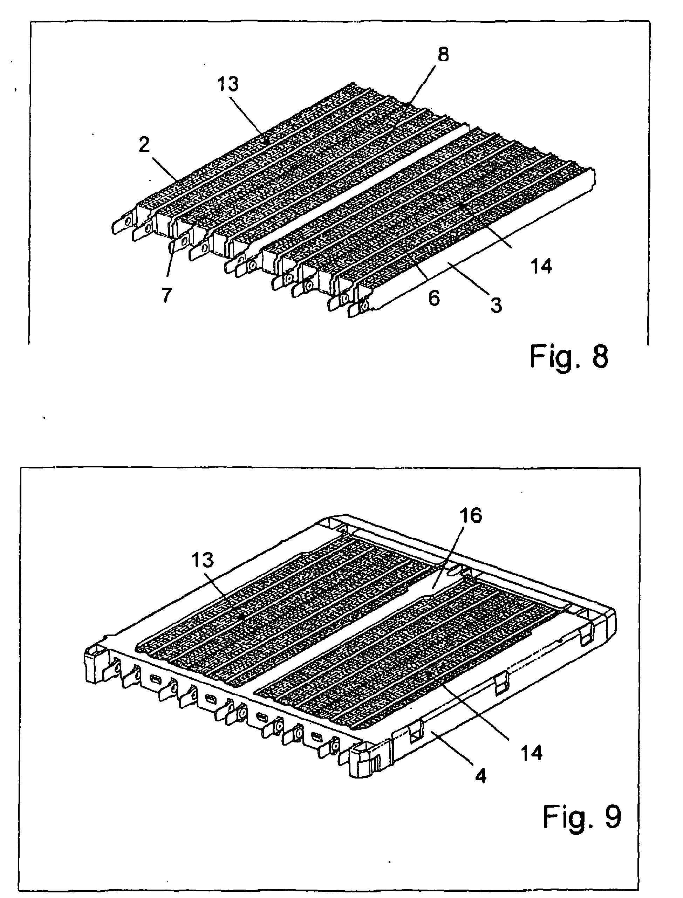

Entsprechend den Figuren 6 und 7 ist in den Figuren 8 und 9 ein Teil einer erfindungsgemäßen Heizungsanordnung 1 mit den Baugruppen 13 und 14 dargestellt, die über die Netzspannung, beispielsweise 230 V versorgt werden und demnach die Hochspannungsbaugruppen der Heizungsanordnung 1 bilden. Der Aufbau der einzelnen Baugruppen 13 und 14 ist im Wesentlichen identisch mit dem der in Fig. 6 und 7 erläuterten Baugruppen 11 und 12. Jedoch sind die PTC-Elemente 2 der Baugruppen 13 und 14, angepasst an die Netzspannung ausgelegt und somit vorteilhafterweise unterschiedlich zu den PTC-Elementen 2 der Niederspannungsbaugruppen 11 und 12 ausgebildet, Fig. 9 zeigt analog zu Fig. 7 die Anordnung der Hochspannungsbaugruppen 13 und 14 in einem Rahmen 4, der im Wesentlichen gleich wie der Rahmen 9 für die Niederspannungsbaugruppen ausgeführt ist.

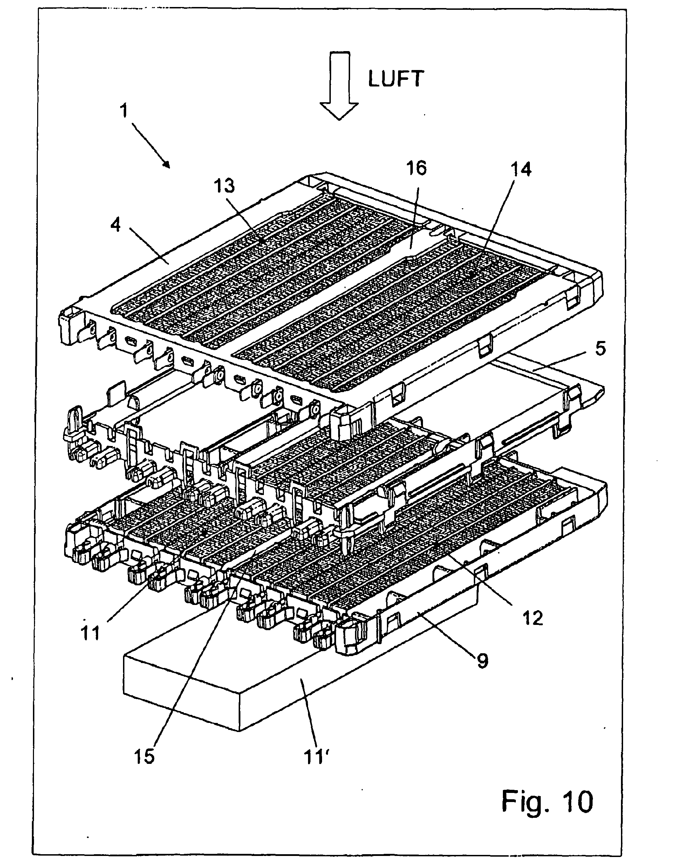

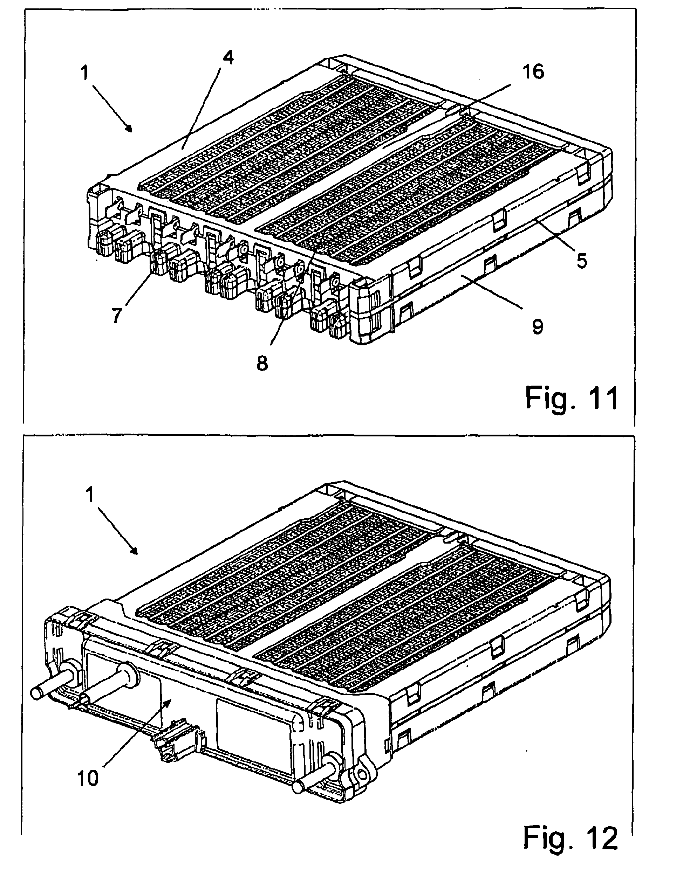

Fig. 10 zeigt die Heizungsanordnung 1 im vormontierten Zustand nach Art einer Explosionsdarstellung. Zwischen den im Rahmen 4 eingefassten Hochspannungsbaugruppen 13 und 14 und den im Rahmen 9 eingefassten Niederspannungsbaugruppen 11 und 12 ist ein Zwischenrahmen 5 angeordnet. Der Zwischenrahmen 5 ist so ausgeführt, dass dieser die beiden Rahmen 4 und 9 im dargestellten Ausführungsbeispiel über eine Clipsverbindung miteinander zu einer kompakten Gesamteinheit wie sie in Fig. 11 (allerdings ohne Baugruppe 11' und deren Rahmen) dargestellt ist, verbindet. Die Baugruppen 11, 12, 13 und 14 sind dabei in den Rahmen 4 und 9 so angeordnet, dass sie voneinander elektrisch und/oder thermisch isoliert sind. Entsprechendes gilt auch für die Baugruppe 11'. Mittels des Zwischenrahmens 5 wird auch sichergestellt, dass die Niederspannungsbaugruppen 11 und 12 von den Hochspannungsbaugruppen 13 und 14 elektrisch isoliert sind. Der Zwischenrahmen 5 kann alternativ ebenfalls eine Querstrebe in der Symmetrieebene gemäß den Rahmen 4 und 9 aufweisen.

Denkbar ist es auch, dass als Hochspannung eine erhöhte Bordnetzspannung verwendet wird. So wird derzeit beispielsweise diskutiert, dass für die Warmlaufphase eines Motors (welche bei modernen, verbrauchsoptimierten Motoren durchaus einen beträchtlichen Zeitraum umfassen kann) eine sofortige Beheizung über einen elektrisch betriebenen Heizkörper erfolgen kann Der Heizleistungsbedarf ist dabei teilweise so hoch, dass mit einer üblichen Bordnetzspannung von 12 V die Stromstärken zu hoch würden. Daher wird beispielsweise der Einbau eines zusätzlichen Generators mit einer erhöhten Spannung von beispielsweise 42 V oder 48 V vorgeschlagen. Mit dieser kann die Hochspannungsbaugruppe der vorgeschlagenen Heizkörperanordnung betrieben werden. Dabei kann bei einem solchen Fahrzeug dank der vorgeschlagenen Heizungsanordnung der Zusatzgenerator - beispielsweise zur Kraftstoffersparnis oder Verschleißminimierung - deutlich schneller wieder abgekoppelt werden, da nach wie vor die Niederspannungsbaugruppen zu Zuheizzwecken zur Verfügung stehen.

Wie aus Fig. 11 ersichtlich ist, ragen die Elemente zur Kontaktierung 7 mit ihren äußeren Enden über die Rahmen 9, 4 und den Zwischenrahmen 5 hinaus. An diesen Enden liegen entsprechenden Kontaktschienen an, die in einer seitlichen Abdeckung 10, dargestellt in Fig. 12, der Kunststoff-Rahmen 4 und 9 vorgesehen sind, und die eine gemeinsame elektrische Kontaktierung der einzelnen Heizstränge 8, jeweils der Nieder- und Hochspannungsbaugruppen ermöglichen (die Baugruppe 11' ist vorliegend nicht dargestellt). Um eine sichere Kontaktierung zu gewährleisten, können an den Elemente zur Kontaktierung Federzungen vorgesehen sein. Die Abdeckung 10 wird seitlich aufgesteckt und mittels weiterer Clipsverbindungen an den beiden Rahmenelementen gehalten. Der vollständig zusammengebaute Zustand ist in Fig. 12 dargestellt, wobei diese - im Gegensatz zur Darstellung von Fig. 12 - auch den Rahmen der Baugruppe 11' abdeckt.

Die Nieder- und Hochspannungsbaugruppen sind in Strömungsrichtung der zu erwärmenden Luft unmittelbar hintereinander angeordnet und mittels der Rahmen 9 und 4 und des Zwischenrahmens 5 zu einer sehr kompakten Heizanordnung 1 zusammengeführt.

Die einzelnen Heizstränge 8 können hierbei als Standard-Elemente dienen, welche in unterschiedliche Rahmen 4 und 9 eingesetzt werden können, wodurch die Herstellungskosten verringert werden. Dabei sind vorliegend die Heizstränge 8 jeweils der Nieder- und Hochspannungsbaugruppen identisch ausgebildet. Jede Baugruppe besteht aus Unterbaugruppen, vorliegend in der Form von PTC-Element, den benachbarten Kontaktblechen und (teilweise oder einseitig) den hieran angebrachten Wellrippen, so dass die Herstellungskosten weiter gesenkt werden können.

Die in Längsrichtung der PTC-Elemente 2 verlaufende Querstrebe 15 und 16 in den Rahmen 9 und 4 dient zum Einen der Stabilisierung und zum Anderen der räumlichen Trennung der beiden Baugruppen. Durch die Trennung der Baugruppen, die unabhängige Ansteuerungsmöglichkeit und die Querstreben 15 und 16 ist die Heizanordnung vorteilhaft für eine zweizonige Klimaanlage einsetzbar.

Zur Realisierung einer vierzonigen Klimaanlage, kann in den Rahmen 4 und 9 kann auch eine senkrecht zu den PTC-Elementen angeordnete Querstrebe eingesetzt werden. Dabei sind je zwei Zonen der Klimaanlage auf Grund des Vorhandenseins von jeweils nur zwei oder mehr Baugruppen für Nieder- und Hochspannungsteil miteinander gekoppelt, d.h. die fahrerseitige Klimatisierung von Front und Fond sowie die beifahrerseitige Klimatisierung von Front und Fond sind miteinander gekoppelt. Dies hat, da der Zuheizer im Wesentlichen nur eine Hilfsfunktion hat, keine wesentliche Beeinträchtigung des Komforts zur Folge, insbesondere da durch die unterschiedlich dicke Ausgestaltung der Heizungsanordnung in einzelnen Bereichen ein Teil der Luft stärker erwärmt werden kann. Prinzipiell ist jedoch auch das Vorsehen von je vier Baugruppen möglich, entsprechend den vier Zonen, wobei im Extremfall jeweils, d.h. in jeder Zone, eine unterschiedlich dicke Ausgestaltung der Heizungsanordnung vorgesehen sein kann, bspw. durch eine mittige Anordnung zusätzlicher Baugruppen. Auch in diesem Fall können zumindest teilweise spiegelbildlich ausgebildete oder identische Baugruppen verwendet werden, wobei die elektrische Kontaktierung bevorzugt von beiden Seiten erfolgt.

Gemäß einer nicht näher in der Zeichnung dargestellten Variante des zweiten Ausführungsbeispiels ist in einem Rahmen, wie er gemäß dem zweiten Ausführungsbeispiel für die Baugruppen 11 und 12 vorgesehen ist, nur mittig eine einzige, vorliegend entsprechend der Baugruppe 11 des zweiten Ausführungsbeispiels ausgebildete Baugruppe angeordnet. Der übrige Raum bleibt leer. Über einen Zwischenrahmen ist ein weiterer, zweiter Rahmen, der zwei Baugruppen enthält, welche vorliegend den Baugruppen 11 und 12 des zweiten Ausführungsbeispiels entsprechen, am ersten Rahmen angebracht. Sämtliche Baugruppen sind vorliegend Niederspannungsbaugruppen. Am ersten oder zweiten Rahmen kann - bspw. mittels eines weiteren Zwischenrahmens - ein weiterer Rahmen angebracht sein, der bspw. zwei Hochspannungsbaugruppen enthält, welche den Baugruppen 13 und 14 des zweiten Ausführungsbeispiels entsprechen.

Eine weitere, nicht in der Zeichnung dargestellte Variante sieht eine unvollständige Baugruppe vor, welcher ein Teil des PTC-Netzes fehlt, so dass - bspw. bei Betrachtung der in Fig. 6 dargestellten Baugruppe 11 die einzelnen PTC-Elemente, Kontaktbleche und Wellrippen kürzer ausgebildet sind als diejenigen der benachbarten Baugruppe 12. Um dennoch eine ausreichende Fixierung im Rahmen zu ermöglichen, kann bspw. das in Fig. 6 links hinten dargestellte Kontaktblech nicht verkürzt, sondern in seiner vollen Länge ausgebildet sein. Soll die Stabilität erhöht werden, so kann auch die entsprechende Wellrippe und ggf. das nächste Kontaktblech lang ausgebildet sein. Eine direkte Wärmeübertragungsfunktion wird - mangels benachbartem PTC-Elements - durch den entsprechenden Bereich der Wellrippe nicht erfüllt.

Ebenfalls kann gemäß einer letzten Variante die unvollständige Baugruppe auch mit einer zentralen Aussparung versehen sein. Diese kann durch Ersetzen der (langen) Wellrippen im mittleren Bereich mit zwei deutlich kürzen Wellrippen, die außenseitig angeordnet sind, bewirkt werden.

Die Rahmen mit Baugruppen gemäß den beiden zuvor beschriebenen Varianten können, wie bei der ersten der drei o.g. Varianten beschrieben, mit Rahmen, welche weitere Baugruppen enthalten, direkt oder ggf. über Zwischenrahmen verbunden sein. In jedem Fall sind jedoch mindestens zwei Teilluftströme vorgesehen, welche einen unterschiedlich langen Weg durch die Baugruppen bzw. deren PTC-Netze aufweisen und dadurch unterschiedlich erwärmt werden können.

Die doppelte (oder mehrfache) Ausgestaltung kann neben oder anstelle der Niederspannungsbaugruppen auch die Hochspannungsbaugruppen betreffen, wobei durchaus auch drei oder mehr Baugruppen hintereinander von einem (Teil-)Luftstrom durchströmt werden können. Diese Baugruppen können in einem einzigen Heizstrang oder in einer Mehrzahl von, ggf. auch getrennt geregelten Heizsträngen angeordnet sein, wobei - bei entsprechender Ausgestaltung - an unterschiedlichen Heizsträngen auch unterschiedliche Spannungen anliegen können.

## Patentansprüche

1. Heizungsanordnung (1), insbesondere für ein Kraftfahrzeug, die zumindest zwei Baugruppen (11, 11', 12, 13, 14) umfasst, wobei jede der Baugruppen (11, 11', 12, 13, 14) zumindest einen Heizstrang (8) umfasst; mit zumindest jeweils einem elektrischen Heizelement, insbesondere PTC-Element (2), Kontaktelementen und zumindest jeweils einem Eement zur Wärmeübertragung, wobei mindestens zwei Baugruppen (11, 12 und 11') in Luftströmungsrichtung hinter-einander in verschiedenen Ebenen angeordnet sind, **dadurch gekennzeichnet, dass** in einer ersten Ebene ein erster Teilluftstrom an dem oder den Heizelementen mindestens einer der Baugruppen (11') vorbeigeführt und ein zweiter Teilluftstrom durch die Baugruppen (11') geführt und an dem oder den Heizelementen entlanggeführt ist, und zumindest ein Teil des ersten Teilluftstroms und/oder zumindest ein Teil des zweiten Teilluftstroms zuvor oder danach in einer zweiten Ebene durch mindestens eine weitere Baugruppe (11 und/oder 12 und/oder 13 und/oder 14) geführt und an dem oder den Heizelementen entlanggeführt ist.

2. Heizungsanordnung nach Anspruch 1, **dadurch gekennzeichnet, dass** die Baugruppe(n) (11'), die vom ersten Teilluftstrom durchströmt werden und an denen der zweite Teilluftstrom vorbeiströmt, vorzugsweise 50% +/- 25%, Insbesondere 50% +/- 15%, insbesondere bevorzugt 50% +/- 5% der Gesamtfläche senkrecht zur Luftströmungsrichtung einnehmen.

3. Heizungsanordnung nach Anspruch 1 oder 2, **dadurch gekennzeichnet, dass** mindestens eines der elektrischen Heizelemente (2) der vom ersten Teilluftstrom durchströmte Baugruppe (11') versetzt zu mindestens einem in Luftströmungsrichtung dahinter oder davor angeordneten elektrischen Heizelement (2) der benachbarten Baugruppe (11, 12, 13, 14) angeordnet ist.

4. Heizungsanordnung nach Anspruch 3, **dadurch gekennzeichnet, dass** die elektrischen Heizelemente (2) der vom ersten Teilluftstrom durchströmte Baugruppe (11') auf Lücke bezüglich der elektrischen Heizelemente (2) der in Luftströmungsrichtung dahinter oder davor angeordneten, benachbarten Baugruppe (11, 12, 13, 14) angeordnet sind.

5. Heizungsanordnung nach einem der vorhergehenden Ansprüche, **dadurch gekennzeichnet, dass** die Leistung der vom ersten Teilluftstrom durchströmten Baugruppe (11') kleiner ist als die Gesamtleistung der in einer Ebene senkrecht zur Luftströmungsrichtung angeordneten Baugruppe(n) (11 und 12).

6. Heizungsanordnung nach einem der vorhergehenden Ansprüche, **dadurch gekennzeichnet, dass** die Leistung der vom ersten Teilluftstrom durchströmten Baugruppe (11') 400 bis 1000 W, insbesondere 500 bis 800 W, insbesondere 600 +/- 50W beträgt.

7. Heizungsanordnung nach einem der vorhergehenden Ansprüche, **dadurch gekennzeichnet, dass** die Leistung der vom gesamten Luftstrom durchströmten Baugruppe(n) (11 und 12), die in einer Ebene senkrecht zur Luftströmungsrichtung angeordnet sind, 500 bis 2000 W, insbesondere 800 bis 1500 W, insbesondere 1000 +/- 100W beträgt.

8. Heizungsanordnung nach einem der vorhergehenden Ansprüche, **dadurch gekennzeichnet, dass** zumindest eine Baugruppe (11, 11', 12) von einer Niederspannungsquelle versogbar ist.

9. Heizungsanordnung nach einem der vorhergehenden Ansprüche, **dadurch gekennzeichnet, dass** zumindest eine erste Baugruppe (11, 11', 12) von einer Niederspannungsquelle und zumindest eine zweite Baugruppe (13, 14) von einer Hochspannungsquelle versorgbar ist.

10. Heizungsanordnung nach einem der vorhergehenden Ansprüche, **dadurch gekennzeichnet, dass** Halteelemente oder Rahmen (4, 9), welche mindestens jeweils eine Baugruppe (11, 11', 12, 13, 14) halten, direkt miteinander verbunden sind, oder dass Halteelemente oder Rahmen (4, 9), welche mindestens jeweils eine Baugruppe (11, 11', 12, 13, 14) halten, indirekt über ein Verbindungselement, insbesondere einen Zwischenrahmen (5), miteinander verbunden sind.

11. Heizungsanordnung nach einem der vorhergehenden Ansprüche, **dadurch gekennzeichnet, dass** die Heizungsanordnung (1) mindestens je zwei unabhängige Baugruppen (11, 11', 12, 13, 14) oder Heizstränge (8), insbesondere für den Niederspannungstell und den Hochspannungsteil der Heizungsanordnung (1) umfasst, wobei ein oder mehrere Baugruppen (11, 11', 12, 13, 14) oder Heizstränge (8) einer oder zwei Klimazonen einer mehrzonigen Klimaanlage zugeordnet sind.

## Claims

1. Heater (1), in particular for a motor vehicle, comprising at least two sub-assemblies (11, 11', 12, 13, 14), each of said sub-assemblies (11, 11', 12, 13, 14) comprising at least one heating section (8) with at least one electrical heating element, in particular a PTC element (2), contact elements and at least one element for transferring heat, at least two sub-assemblies (11, 12 and 11') being positioned one behind another in the direction of air flow in different planes,
**characterised in that**
a first part air flow flows past the heating element/s of at least one of the sub-assemblies (11') in one plane whereas a second part air flow passes through the sub-assemblies (11') and along the heating element/s, and previously or subsequently at least part of the first part air flow and/or at least part of the second part air flow passes through at least one further sub-assembly (11 and/or 12 and/or 13 and/or 14) and along the heating element/s in a second plane.

2. Heater in accordance with claim 1,
**characterised in that**
the sub-assembly/ies (11') through which the first part air flow flows and past which the second part air flow flows occupy preferably 50% ± 25%, in particular 50% ± 15%, and in particular preferably 50% ± 5% of the entire surface perpendicular to the direction of air flow.

3. Heater in accordance with claim 1 or 2,
**characterised in that**
at least one of the electrical heating elements (2) of the sub-assembly (2) through which the first part air flow flows is positioned offset in relation to at least one heating element (2) of the adjacent sub-assembly (11, 12, 13, 14) positioned downstream or upstream of said heating element it in the direction of air flow.

4. Heater in accordance with claim 3,
**characterised in that**
the electrical heating elements (2) of the sub-assembly (11') through which the first part air flow flows are positioned on gaps in relation to the electrical heating elements (2) of the adjacent sub-assembly (11, 12, 13, 14) positioned downstream or upstream of said heating elements in the direction of air flow.

5. Heater in accordance with one of the preceding claims,
**characterised in that**
the output of the sub-assembly (11') through which the first part air flow flows is less than the total output of the sub-assembly/ies (11 and 12) positioned in a plane perpendicular to the direction of air flow.

6. Heater in accordance with one of the preceding claims,
**characterised in that**
the output of the sub-assembly (11') through which the first part air flow flows is 400 to 1000 W, in particular 500 to 800 W, in particular 600 ± 50 W.

7. Heater in accordance with one of the preceding claims,
**characterised in that**
the output of the sub-assembly/ies (11 and 12) through which the entire air flow flows and which are positioned in a plane perpendicular to the direction of air flow is 500 to 2000 W, in particular 800 to 1500 W, in particular 1000 ±100 W.

8. Heater in accordance with one of the preceding claims,
**characterised in that**
at least one sub-assembly (11, 11', 12) can be supplied from a low-voltage source.

9. Heater in accordance with one of the preceding claims,
**characterised in that**
at least one first sub-assembly (11, 11', 12) can be supplied from a low-voltage source and at least one second sub-assembly (13, 14) can be supplied from a high-voltage source.

10. Heater in accordance with one of the preceding claims,
**characterised in that**
holding elements or frames (4, 9) holding at least one sub-assembly (11, 11', 12, 13, 14) are connected to one another directly, or holding element or frames (4, 9) holding at least one sub-assembly (11, 11', 12, 13, 14) are connected to one another indirectly via a connecting element, in particular an intermediate frame (5).

11. Heater in accordance with one of the preceding claims,
**characterised in that**
the heater (1) comprises at least two independent sub-assemblies (11, 11', 12, 13, 14) or heating sections (8), in particular for the low-voltage part and the high-voltage part of the heater (1), one or more sub-assemblies (11, 11', 12, 13, 14) or heating sections (8) being assigned to one or two air conditioning zones in a multi -zone air conditioning system.

## Revendications

1. Dispositif de chauffage (1), en particulier pour un véhicule automobile, qui comprend au moins deux ensembles (11, 11', 12, 13, 14), où chacun des ensembles (11, 11', 12, 13, 14) comprend au moins un circuit de chauffage (8) comportant, à chaque fois, au moins un élément chauffant électrique, en particulier un élément (2) à coefficient de température positif (CTP), des éléments de contact et, à chaque fois, au moins un élément servant à la transmission de chaleur, où au moins deux ensembles (11, 12 et 11') sont disposés dans différents plans, l'un derrière l'autre, dans la direction de circulation d'air, **caractérisé en ce que**, dans un premier plan, un premier flux d'air partiel est guidé en passant devant l'élément chauffant ou les éléments chauffants d'au moins l'un des ensembles (11'), et un deuxième flux d'air partiel est guidé à travers les ensembles (11') et le long de l'élément chauffant ou des éléments chauffants, et au moins une partie du premier flux d'air partiel et / ou au moins une partie du deuxième flux d'air partiel est guidée, avant ou après, dans un deuxième plan, à travers au moins un autre ensemble (11 et / ou 12 et / ou 13 et / ou 14) et le long de l'élément chauffant ou des éléments chauffants.

2. Dispositif de chauffage selon la revendication 1, **caractérisé en ce que** l'ensemble ou les ensembles (11'), qui est ou sont traversé(s) par le premier flux d'air partiel et devant lequel ou lesquels circule le deuxième flux d'air partiel, occupent de préférence 50 % +/- 25 %, en particulier 50 % +/- 15 %, en particulier de préférence 50 % +/- 5 % de la surface totale, perpendiculairement à la direction de circulation d'air.

3. Dispositif de chauffage selon la revendication 1 ou 2, **caractérisé en ce qu'**au moins l'un des éléments chauffants électriques (2) de l'ensemble (11') traversé par le premier flux d'air partiel est disposé en étant décalé par rapport à au moins un élément chauffant électrique (2) de l'ensemble contigu (11, 12, 13, 14), disposé derrière ou devant, dans la direction de circulation d'air.

4. Dispositif de chauffage selon la revendication 3, **caractérisé en ce que** les éléments chauffants électriques (2) de l'ensemble (11') traversé par le premier flux d'air partiel sont disposés sur un espace vide concernant les éléments chauffants électriques (2) de l'ensemble contigu (11, 12, 13, 14) disposé derrière ou devant, dans la direction de circulation d'air.

5. Dispositif de chauffage selon l'une quelconque des revendications précédentes, **caractérisé en ce que** la puissance de l'ensemble (11') traversé par le premier flux d'air partiel est inférieure à la puissance totale de l'ensemble ou des ensembles (11 et 12) disposé(s) dans un plan perpendiculaire à la direction de circulation d'air.

6. Dispositif de chauffage selon l'une quelconque des revendications précédentes, **caractérisé en ce que** la puissance de l'ensemble (11') traversé par le premier flux d'air partiel est comprise entre 400 W et 1000 W, en particulier entre 500 W et 800 W, en particulier égale à 600 W +/- 50 W.

7. Dispositif de chauffage selon l'une quelconque des revendications précédentes, **caractérisé en ce que** la puissance de l'ensemble ou des ensembles (11 et 12) traversé(s) par le flux d'air total, qui sont disposés dans un plan perpendiculaire à la direction de circulation d'air, est comprise entre 500 W et 2000 W, en particulier entre 800 W et 1500 W, en particulier égale à 1000 W +/- 100 W.

8. Dispositif de chauffage selon l'une quelconque des revendications précédentes, **caractérisé en ce qu'**au moins un ensemble (11, 11', 12) peut être alimenté par une source de basse tension.

9. Dispositif de chauffage selon l'une quelconque des revendications précédentes, **caractérisé en ce qu'**au moins un premier ensemble (11, 11', 12) peut être alimenté par une source de basse tension et au moins un deuxième ensemble (13, 14) par une source de haute tension.

10. Dispositif de chauffage selon l'une quelconque des revendications précédentes, **caractérisé en ce que** des éléments de maintien ou cadres (4, 9), qui maintiennent à chaque fois au moins un ensemble (11, 11' , 12, 13, 14), sont reliés directement entre eux, ou bien **en ce que** des éléments de maintien ou cadres (4, 9), qui maintiennent à chaque fois au moins un ensemble (11, 11', 12, 13, 14), sont reliés entre eux de façon indirecte, par un élément d'assemblage, en particulier un cadre intermédiaire (5).

11. Dispositif de chauffage selon l'une quelconque des revendications précédentes, **caractérisé en ce que** le dispositif de chauffage (1) comprend à chaque fois au moins deux ensembles (11, 11', 12, 13, 14) ou circuits de chauffage (8), indépendants, en particulier pour la partie basse tension et pour la partie haute tension du dispositif de chauffage (1), où un ou plusieurs ensembles (11, 11', 12, 13, 14) ou circuits de chauffage (8) est ou sont associé(s) à une ou deux zones de climatisation d'un système de climatisation à plusieurs zones.
